# EUROPEAN PATENT APPLICATION

(11) **EP 4 679 580 A1**
(43) Date of publication of application: **14.01.2026**
(21) Application number: 24767150.6
(22) Date of filing: 05.03.2024
(51) Int. Cl.: H01M 50/15, H01G 11/78, H01M 10/04, H01M 10/058, H01M 50/103, H01M 50/131, H01M 50/176

(54) **POWER STORAGE DEVICE, LID BODY, AND LID UNIT**

(30) Priority: 06.03.2023 JP 2023034132
(71) Applicant: Dai Nippon Printing Co., Ltd., Tokyo 162-8001 (JP)
(72) Inventor: MIYASHIRO, Kae, Tokyo 162-8001 (JP); SASAKI, Miho, Tokyo 162-8001 (JP); URIU, Toshibumi, Tokyo 162-8001 (JP); KANAZAWA, Sayako, Tokyo 162-8001 (JP)
(74) Representative: Müller-Boré & Partner Patentanwälte PartG mbB
(86) International application number: PCT/JP2024/008344
(87) International publication number: WO 2024/185783

(57) **Abstract**

A power storage device according to the present invention comprises an electrode body and an exterior body that seals the electrode body. The exterior body includes: an exterior film that wraps around the electrode body such that an opening is formed; and a lid body that is placed on the opening. The electrode body includes a corner section at which an R surface is formed, the lid body includes a corner section at which an R surface is formed, and the absolute value of the difference between the radius of curvature of the corner section of the electrode body and the radius of curvature of the corner section of the lid body is 10 mm or less.

## Description

### Technical Field

The present invention relates to an electrical storage device, a lid, and a cover unit.

### Background Art

PTL 1 discloses an example of an electrical storage device. The electrical storage device includes an electrode assembly and an outer packaging sealing the electrode assembly. The outer packaging includes an exterior film wrapping the electrode assembly so as to form an opening, and a lid disposed at the opening. The exterior film and the lid are joined.

### Citation List

### Patent Literature

PTL 1: Japanese Patent Laid-open Publication No. 2022-123686

### Summary of Invention

### Technical Problem

In the electrical storage device, for example, a corner having an R surface may be formed on the electrode assembly and the lid. In this case, when the shapes of the corners of the electrode assembly and the lid are greatly different from each other, the exterior film may not follow the electrode assembly, and the adhesion between the exterior film and the electrode assembly may deteriorate.

An object of the present invention is to provide an electrical storage device in which an electrode assembly can be suitably held by an exterior film, a lid used for the electrical storage device, and a cover unit including the lid.

### Solution to Problem

An electrical storage device according to a first aspect of the present invention includes: an electrode assembly; and an outer packaging sealing the electrode assembly, in which the outer packaging includes an exterior film wrapping the electrode assembly so as to form an opening, and a lid disposed at the opening, the electrode assembly has a corner at which an R surface is formed, the lid has a corner in which an R surface is formed, and an absolute value of a difference between a radius of curvature of the corner of the electrode assembly and a radius of curvature of the corner of the lid is 10 mm or less.

An electrical storage device according to a second aspect of the present invention is the electrical storage device according to the first aspect, in which the radius of curvature of the corner of the lid is smaller than the radius of curvature of the corner of the electrode assembly.

An electrical storage device according to a third aspect of the present invention is the electrical storage device according to the first aspect or the second aspect, in which the radius of curvature of the corner of the lid is 0.05 mm or more.

Am electrical storage device according to a fourth aspect of the present invention is the electrical storage device according to any one of the first to third aspects, in which the corner of the lid and the corner of the electrode assembly face each other.

A lid according to a fifth aspect of the present invention is used as an outer packaging of an electrical storage device, the lid having at least one corner in which an R surface is formed, in which a radius of curvature of the corner is 20 mm or less.

A cover unit according to a sixth aspect of the present invention includes: the lid according to the fifth aspect; and an electrode terminal joined to the lid. Advantageous Effects of Invention

According to the electrical storage device, the lid used for the electrical storage device, and the cover unit including the lid according to the present invention, the electrode assembly can be suitably held by the exterior film.

### Brief Description of Drawings

[Fig. 1A] Fig. 1A is a perspective view of an electrical storage device according to an embodiment.
[Fig. 1B] Fig. 1B is a view relating to a method for measuring a sealing strength of a second sealed portion of the electrical storage device of Fig. 1A.
[Fig. 2] Fig. 2 is a perspective view showing an outline shape of an electrode assembly included in the electrical storage device of Fig. 1A.
[Fig. 3] Fig. 3 is a view showing an outline shape of a front surface of the electrode assembly of Fig. 2.
[Fig. 4] Fig. 4 is a sectional view showing a layer configuration of an exterior film of the electrical storage device of Fig. 1A.
[Fig. 5] Fig. 5 is a view in which the exterior film included in the electrical storage device of Fig. 1A is unfolded.
[Fig. 6] Fig. 6 is a sectional view taken along line D6-D6 in Fig. 1A.
[Fig. 7] Fig. 7 is a side view of a lid where the exterior film of Fig. 6 is omitted.
[Fig. 8] Fig. 8 is a plan view of the lid where the exterior film of Fig. 6 is omitted.
[Fig. 9] Fig. 9 is a flowchart showing an example of a manufacturing process of the electrical storage device of Fig. 1A.
[Fig. 10] Fig. 10 is a sectional view of a lid of an electrical storage device of a modification.
[Fig. 11] Fig. 11 is a sectional view of a lid of an electrical storage device of another modification.

### Description of Embodiments

Hereinafter, an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less.

### [1. Embodiment]

### <1-1. Configuration of Electrical Storage Device>

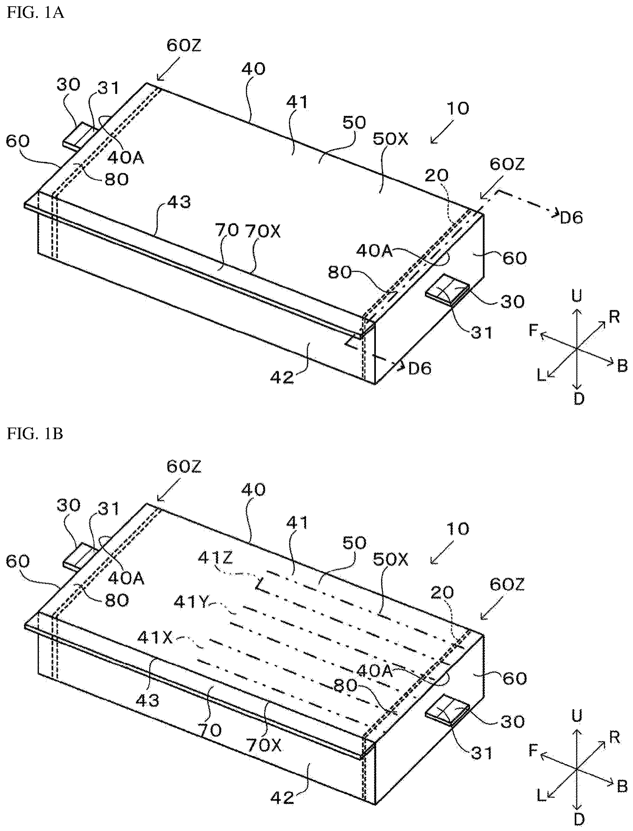

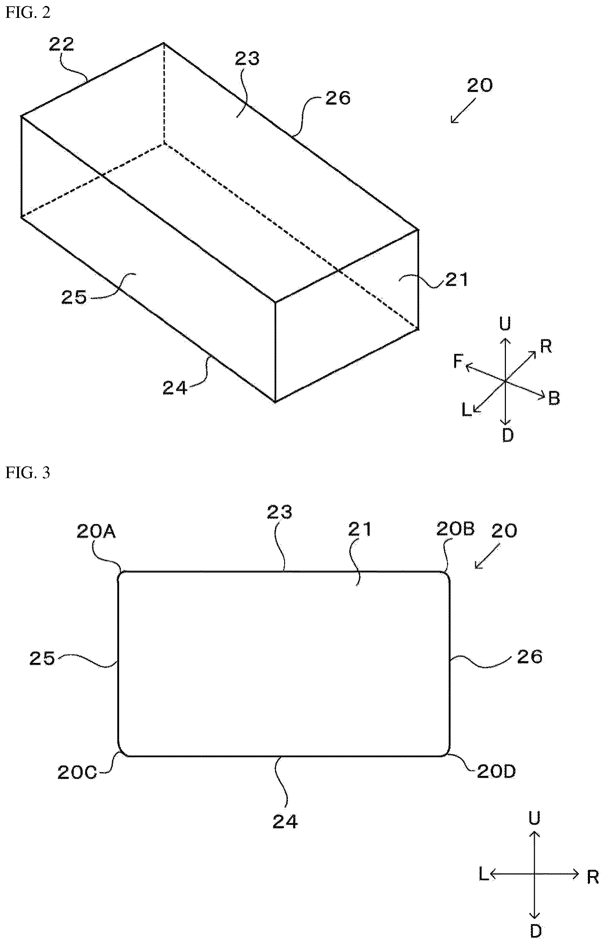

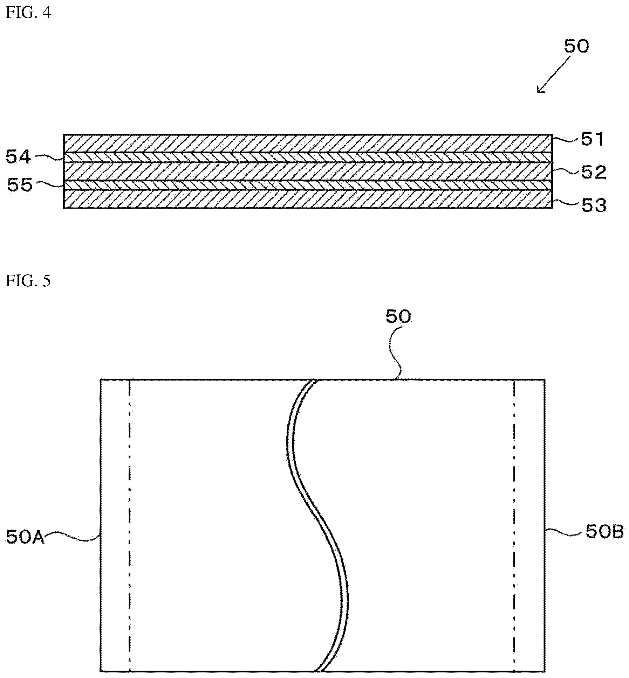

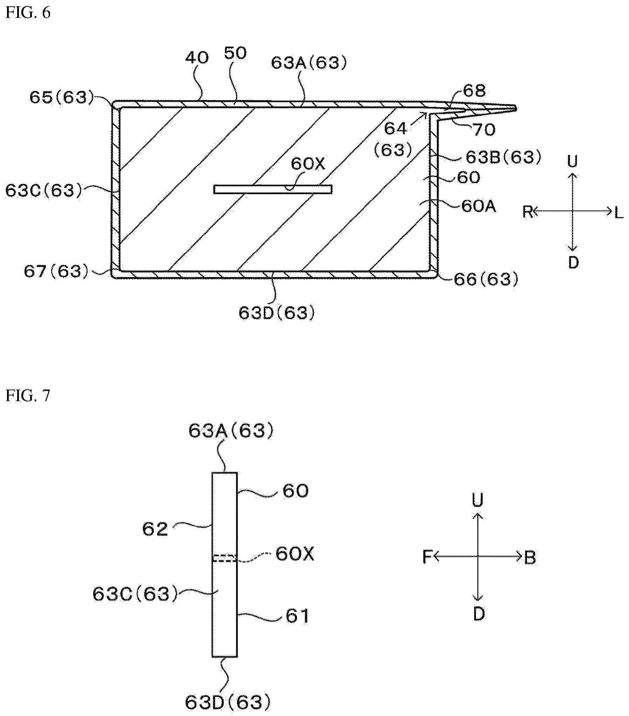

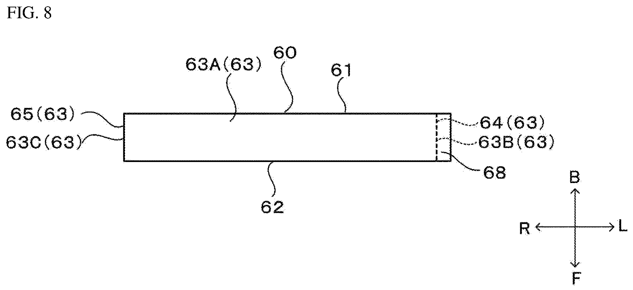

Fig. 1A is a plan view schematically showing an electrical storage device 10 of a first embodiment. Fig. 1B is a view relating to a method for measuring a sealing strength of a second sealed portion 80 of the electrical storage device 10. Fig. 2 is a perspective view showing an outline shape of an electrode assembly 20 included in the electrical storage device 10 of Fig. 1A. Fig. 3 is a view showing an outline shape of a front surface of the electrode assembly 20 of Fig. 2. Fig. 4 is a sectional view showing a layer configuration of an exterior film 50 of the electrical storage device 10 of Fig. 1A. Fig. 5 is a view in which the exterior film 50 included in the electrical storage device 10 of Fig. 1A is unfolded. Fig. 6 is a sectional view taken along line D6-D6 in Fig. 1A. Fig. 7 is a side view of a lid 60 included in the electrical storage device 10 of Fig. 1A. Fig. 8 is a plan view of the lid 60 of Fig. 7. In Fig. 1A, the direction along arrow UD indicates a thickness direction of the electrical storage device 10, the direction along arrow LR indicates a width direction of the electrical storage device 10, and the direction along arrow FB indicates a depth direction of the electrical storage device 10. The directions indicated by each of arrows UDLRFB are also shared with the subsequent drawings.

The electrical storage device 10 includes an electrode assembly 20, an electrode terminal 30, and an outer packaging 40. The electrode assembly 20 includes, for example, a lithium ion battery, a capacitor, a lithium ion polymer battery, an all-solid-state battery, a semi-solid-state battery, a pseudo-solid-state battery, a polymer battery, an all-polymer battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, or electrodes (positive electrode and negative electrode) forming an electrical storage member such as a capacitor, and a separator. In the present embodiment, the shape of the electrode assembly 20 is substantially a cuboid. Note that the "substantially cuboid" includes a perfect cuboid, and for example, a solid that can be seen as a cuboid by modifying the shape of a part of the outer surface thereof. The shape of the electrode assembly 20 may be, for example, a cylinder or a polygonal column.

As shown in Fig. 2, in the present embodiment, the electrode assembly 20 has a front surface 21, a back surface 22, an upper surface 23, a lower surface 24, a first lateral surface 25, and a second lateral surface 26. The front surface 21 faces one lid 60. The back surface 22 faces the other lid 60. The upper surface 23 constitutes one of a pair of first surfaces 41 of the outer packaging 40 described later. The lower surface 24 constitutes the other of the pair of first surfaces 41 of the outer packaging 40 described later The first lateral surface 25 constitutes one of a pair of second surfaces 42 of the outer packaging 40 described later. The second lateral surface 26 constitutes the other of the pair of second surfaces 42 of the outer packaging 40 described later.

As shown in Fig. 3, the electrode assembly 20 has a corner 20A, a corner 20B, a corner 20C, and a corner 20D. In the corner 20A, the corner 20B, the corner 20C, and the corner 20D, an R surface is formed. The corner 20A is formed at a boundary between the upper surface 23 and the first lateral surface 25. The corner 20B is formed at a boundary between the upper surface 23 and the second lateral surface 26. The corner 20C is formed at a boundary between the first lateral surface 25 and the lower surface 24. The corner 20D is formed at a boundary between the second lateral surface 26 and the lower surface 24. In Fig. 2, the shapes of the R surfaces of the corners 20A to 20D are omitted for simplification of the drawing.

In the present embodiment, the electrical storage device 10 includes two electrode terminals 30. The electrode terminal 30 is a metal terminal for use in input and output of electrical power in the electrode assembly 20. One end part of the electrode terminal 30 is electrically connected to an electrode (positive electrode or negative electrode) in the electrode assembly 20. The other end part of the electrode terminal 30 protrudes outward from an end edge of the outer packaging 40, for example. The electrode terminal 30 is only required to enable input and output of electrical power in the electrode assembly 20, and is not required to protrude from the outer packaging 40, for example. When the lid 60 described later is made from, for example, metal, the lid 60 may also function as the electrode terminal 30. In this case, the lid 60 having a function as an electrode terminal may, or is not required to, protrude from the outer packaging 40.

The metal material for forming the electrode terminal 30 is, for example, aluminum, nickel, copper or the like. For example, when the electrode assembly 20 is a lithium ion battery, the electrode terminal 30 connected to the positive electrode is typically made from aluminum or the like, and the electrode terminal 30 connected to the negative electrode is typically made from copper, nickel or the like. The outermost layer of the electrode assembly 20 is not necessarily an electrode, and may be, for example, a protective tape or a separator.

The outer packaging 40 seals the electrode assembly 20. The outer packaging 40 includes the exterior film 50 and the lid 60. The exterior film 50 wraps the electrode assembly 20 so as to have an opening 40A. In the present embodiment, the exterior film 50 is wound around the electrode assembly 20 so as to have the opening 40A. The lid 60 is disposed on a side of the electrode assembly 20 so as to close the opening 40A. The electrode assembly 20 may be accommodated in the exterior film 50 formed in a cylindrical shape so as to form the opening 40A, and the opening 40A may be closed by the lid 60.

It is preferable that an adhesive film 31 is bonded to the electrode terminal 30 from the viewpoint of suitable bonding to the lid 60. The adhesive film 31 can be arbitrarily selected as long as it is a film capable of bonding the electrode terminal 30 formed of metal and the lid 60 formed of resin. For the adhesive film 31, for example, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride can be used. The adhesive film 31 can be a film having a single layer or two or more layers of any of the above-mentioned resins. In the present embodiment, the adhesive film 31 is joined to substantially the whole of a portion of the electrode terminal 30 which is covered with the lid 60.

For example, there is a method in which a housing portion (recess) for housing the electrode assembly 20 is formed in the exterior film 50 through cold molding. However, it is not always easy to form a deep housing portion by such a method. If an attempt is made to form a deep (for example, 15 mm in terms of molding depth) housing portion (recess) by cold molding, pinholes or cracks are generated in the exterior film 50, leading to a rise in possibility that battery performance deteriorates. On the other hand, since the outer packaging 40 seals the electrode assembly 20 by winding the exterior film 50 around the electrode assembly 20, the electrode assembly 20 can be easily sealed regardless of the thickness of the electrode assembly 20. For reducing a dead space between the electrode assembly 20 and the exterior film 50 in order to improve the volume energy density of the electrical storage device 10, it is preferable that the exterior film 50 is wound in a state of being in contact with the outer surface of the electrode assembly 20. In an all-solid-state battery, it is necessary to eliminate the space between the electrode assembly 20 and the exterior film 50 from the viewpoint that it is necessary to uniformly apply a high pressure from the outer surface of the battery for exhibiting battery performance, and therefore, it is preferable that the exterior film 50 is wound in a state of being in contact with the outer surface of the electrode assembly 20.

As shown in Fig. 4, the exterior film 50 is, for example, a laminate (laminate film) including a base material layer 51, a barrier layer 52 and a heat-sealable resin layer 53 in the stated order. In the exterior film 50, the heat-sealable resin layer 53, the base material layer 51, the barrier layer 52, and the heat-sealable resin layer 53 may be laminated in the stated order. In the exterior film 50, the heat-sealable resin layer 53, the barrier layer 52, and the heat-sealable resin layer 53 may be laminated in the stated order. The outermost layer and the innermost layer of the exterior film 50 may be joined to form a first sealed portion 70 described later. The exterior film 50 is not required to include all these layers, and may be free of, for example, the barrier layer 52. That is, the exterior film 50 is only required to be made from a material that is flexible and easy to bend, and the exterior film 50 may be made from, for example, a resin film. The exterior film 50 is preferably heat-sealable.

The base material layer 51 in the exterior film 50 is a layer for imparting heat resistance to the exterior film 50 to suppress generation of pinholes which may occur during processing or distribution. The base material layer 51 includes, for example, at least one of a stretched polyester resin layer and a stretched polyamide resin layer. For example, when the base material layer 51 includes at least one of a stretched polyester resin layer and a stretched polyamide resin layer, the barrier layer 52 can be protected during processing of the exterior film 50 to suppress breakage of the exterior film 50. From the viewpoint of increasing the tensile elongation of the exterior film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film or a biaxially stretched polybutylene terephthalate (PBT) film, and the stretched polyamide resin layer is more preferably a biaxially stretched nylon (ONy) film. The base material layer 51 may include both a stretched polyester resin layer and a stretched polyamide resin layer. From the viewpoint of film strength, the thickness of the base material layer 51 is, for example, preferably 5 to 300 µm, more preferably 20 to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 contains a layer formed of a metal material. Specific examples of the metal material forming the barrier layer 52 include aluminum alloys, stainless steel, titanium steel and steel sheets. When the metal material is used as a metal foil, it is preferable that the metal material includes at least one of an aluminum alloy foil and a stainless steel foil.

In the barrier layer 52, the layer formed of the metal material described above may contain a metal recycled material. Examples of the metal recycled material include recycled materials of an aluminum alloy, stainless steel, titanium steel, or a steel plate. These recycled materials can be each obtained by a known method. The recycled material of the aluminum alloy can be obtained by, for example, a manufacture method described in International Publication No. WO 2022/092231. The barrier layer 52 may be formed only of a recycled material, or may be formed of a mixed material of a recycled material and a virgin material. The metal recycled material is a metal material obtained by, for example, collecting, isolating and purifying various products used in what is called a city, wastes from manufacturing processes, and the like, so that the material can be reused. The virgin material from a metal material is a new metal material obtained by refining a metal natural resource (raw material), which is not a recycled material.

The aluminum alloy foil is more preferably a soft aluminum alloy foil formed of, for example, an annealed aluminum alloy from the viewpoint of improving the moldability or followability of the exterior film 50, and is preferably an aluminum alloy foil containing iron from the viewpoint of further improving the moldability or followability. In the aluminum alloy foil containing iron (100 mass%), the content of iron is preferably 0.1 to 9.0 mass%, more preferably 0.5 to 2.0 mass%. When the content of iron is 0.1 mass% or more, it is possible to obtain the exterior film 50 having more excellent moldability. When the content of iron is 9.0 mass% or less, it is possible to obtain the exterior film 50 more excellent in flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like. From the viewpoint of improving the mechanical strength of the exterior film 50, the aluminum alloy foil is more preferably a hard aluminum alloy foil made of, for example, a work-hardened aluminum alloy. Examples of the hard aluminum alloy foil include aluminum alloy foils having a composition specified in JIS H4160: 1994 A8021H-H18, JIS H4160: 1994 A8079H-H18, JIS H4000: 2014 A8021P-H14, or JIS H4000: 2014 A8079P-H14.

Examples of the stainless steel foil include austenitic stainless steel foils, ferritic stainless steel foils, austenitic/ferritic stainless steel foils, martensitic stainless steel foils and precipitation-hardened stainless steel foils. From the viewpoint of providing the exterior film 50 further excellent in moldability or followability, it is preferable that the stainless steel foil is formed of austenitic stainless steel.

Specific examples of the austenite-based stainless steel foil include SUS 304 stainless steel, SUS 301 stainless steel and SUS 316L stainless steel, and of these, SUS 304 stainless steel is especially preferable.

In the case of a metal foil, the thickness of the barrier layer 52 may be, for example, about 9 to 200 µm as long as it exhibits a function as a barrier layer that suppresses at least infiltration of moisture. The thickness of the barrier layer 52 is preferably about 85 µm or less, more preferably about 50 µm or less, still more preferably about 40 µm or less, particularly preferably about 35 µm or less. The thickness of the barrier layer 52 is preferably about 10 µm or more, still more preferably 20 µm or more, more preferably about 25 µm or more. The thickness of the barrier layer 52 is preferably in the range of about 10 to 85 µm, about 10 to 50 µm, about 10 to 40 µm, about 10 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. When the barrier layer 52 is formed of an aluminum alloy foil, the thickness thereof is especially preferably in above-described range. From the viewpoint of imparting high moldability and high rigidity to the exterior film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 to 200 µm, about 35 to 85 µm, about 35 to 75 µm, about 35 to 70 µm, about 45 to 200 µm, about 45 to 85 µm, about 45 to 75 µm, about 45 to 70 µm, about 50 to 200 µm, about 50 to 85 µm, about 50 to 75 µm, about 50 to 70 µm, about 55 to 200 µm, about 55 to 85 µm, about 55 to 75 µm, or about 55 to 70 µm. When the exterior film 50 has high moldability, deep drawing molding can be facilitated to contribute to an increase in capacity of the electrical storage device. Since the rigidity of the exterior film 50 is enhanced, the exterior film 50 can be suitably wound around the electrode assembly 20 when the exterior film 50 is wound around the electrode assembly 20. When the capacity of the electrical storage device is increased, the weight of the electrical storage device increases, but the enhancement of the rigidity of the exterior film 50 can contribute to high hermeticity of the electrical storage device. In particular, when the barrier layer 52 includes a stainless steel foil, the thickness of the stainless steel foil is preferably about 60 µm or less, more preferably about 50 µm or less, still more preferably about 40 µm or less, still more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, or about 15 to 25 µm.

When the barrier layer 52 is an aluminum foil, it is preferable that a corrosion-resistant film is provided at least on a surface on a side opposite to the base material layer 51 for prevention of dissolution and corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding or winding of the exterior film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 in the exterior film 50 is a layer that imparts a heat sealing property to the exterior film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 µm, more preferably 40 to 150 µm.

The exterior film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. When the exterior film 50 includes a plurality of buffer layers, the buffer layers may lie side-by-side, or may be laminated with the base material layer 51, the barrier layer 52 or the like interposed between the buffer layers.

The material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material for forming a nonwoven fabric is preferably a material having excellent heat resistance. When the buffer layer is made from a nonwoven fabric, the lower limit of the thickness of the buffer layer is preferably 100 µm, still more preferably 200 µm, still more preferably 1,000 µm. When the buffer layer is made from a nonwoven fabric, the upper limit of the thickness of the buffer layer is preferably 5,000 µm, still more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm.

When the buffer layer is made from rubber, the lower limit of the thickness of the buffer layer is preferably 1 mm, still more preferably 0.5 mm. When the buffer layer is made from rubber, the upper limit of the thickness of the buffer layer is preferably 10 mm, still more preferably 5 mm, still more preferably 2 mm. When the buffer layer is made from rubber, the thickness of the buffer layer is preferably in the range of 1 mm to 10 mm, 1 mm to 5 mm, 1 mm to 2 mm, 0.5 mm to 10 mm, 0.5 mm to 5 mm or 0.5 mm to 2 mm.

When the exterior film 50 includes a buffer layer, the buffer layer functions as a cushion, so that the exterior film 50 is prevented from being damaged by the impact of falling of the electrical storage device 10 or handling during manufacturing of the electrical storage device 10.

The lid 60 has, for example, a cuboid shape, and is made from, for example, a resin material. The lid 60 may be a metal molded article. The material for forming the lid 60 may include at least two or more kinds of materials of a metal oxide, a carbon material, and a rubber material. The material may include a metal oxide, a carbon material, and a rubber material.

The lid 60 preferably contains a resin material. Here, the phrase "contain a resin material" means that the content ratio of the resin material is 50 mass% or more, preferably 80 mass% or more, more preferably 90 mass% or more, still more preferably 95 mass% or more when the total of materials for forming the lid 60 is 100 mass%. That is, the material for forming the lid 60 can contain a material other than the resin material in addition to the resin material.

Specific examples of the resin include resins such as polyester, polyolefin, polyamide, epoxy resin, acrylic resin, fluororesin, polyurethane, silicone resin, and phenol resin, and modified products of these resins. The resin material may be a mixture of these resins, a copolymer of these resins, or a modified product of the copolymer. Among them, the resin material is preferably a heat-sealable resin such as polyester or polyolefin, and more preferably polyolefin. When the resin material is resin, the lid 60 may be molded by any molding method.

Specific examples of the polyester include polyethylene terephthalate, polybutylene terephthalate, polyethylene naphthalate, polybutylene naphthalate, polyethylene isophthalate, and copolyester. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate), and polyethylene(terephthalate/decane dicarboxylate). Among them, the resin material is preferably polybutylene terephthalate from the viewpoint of enhancing heat resistance and pressure resistance.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. The polyolefin resin in the case of a copolymer may be a block copolymer or a random copolymer. Among them, the resin material is preferably polypropylene because it is excellent in heat-sealing property and electrolytic solution resistance.

The resin as the resin material may contain a filler if necessary. Specific examples of the filler include glass beads, graphite, glass fiber, and carbon fiber. When the resin as the resin material contains the filler, the deformation resistance of the lid 60 to a temperature change can be improved.

The melt mass flow rate of the resin material contained in the material for forming the lid 60 is preferably in the range of 1 g/10 min to 80 g/10 min, more preferably 5 g/10 min to 60 g/10 min. The melt mass flow rate is measured based on JIS K7210-1:2014.

The lid 60 may contain a conductive material. The phrase "contain a conductive material" means that the content ratio of the conductive material is 50 mass% or more, preferably 80 mass% or more, more preferably 90 mass% or more, still more preferably 95 mass% or more when the total of materials for forming the lid 60 is 100 mass%. That is, the material for forming the lid 60 can contain a material other than the conductive material in addition to the conductive material.

The conductive material for forming the lid 60 is, for example, a metal material. The metal material for forming the lid 60 is, for example, aluminum, an aluminum alloy, nickel, copper, or a copper alloy. For example, when the electrode assembly 20 is a lithium ion battery, the lid 60 connected to the positive electrode is preferably made from aluminum or an aluminum alloy. The lid 60 connected to the negative electrode is preferably made of nickel, copper, or a copper alloy. The material for forming the lid 60 connected to the negative electrode may be copper plated with nickel. The material for forming the lid 60 may contain a metal recycled material. When the lid 60 contains a conductive material, the lid 60 also functions as the electrode terminal 30. Since the electrode terminal 30 can be omitted from the electrical storage device 10, the configuration of the electrical storage device 10 can be simplified.

When the lid 60 contains a conductive material, the lid 60 may be joined to the exterior film 50 with an adhesive film interposed therebetween. The adhesive film can be arbitrarily selected as long as it is a film capable of bonding the exterior film 50 and the lid 60. The adhesive film is preferably a multilayer film including at least a heat-sealable resin layer, a heat-resistant base material layer and a heat-sealable resin layer in the stated order. As specifications about the heat-sealable resin layer of the adhesive film, specifications about the heat-sealable resin layer 53 can be applied. As materials for forming the heat-sealable resin layers on both sides of the adhesive film, the same material or different materials may be used, and materials that match the material for forming the heat-sealable resin layer 53 of the exterior film 50 and the material for forming the lid 60 are appropriately selected. The material for forming the heat-sealable resin layer of the adhesive film, which is bonded to the lid 60, is preferably an acid-modified polyolefin-based resin obtained by graft modification with an acid such as maleic anhydride. For the heat-sealable resin layer of the adhesive film, which is bonded to the exterior film 50, the same material as that for forming the heat-sealable resin layer 53 of the exterior film 50 is preferably used.

For the heat-resistant base material layer, any film may be used as long as it is made from a heat-resistant resin, and examples thereof include non-stretched or stretched films of polyethylene terephthalate, polyethylene naphthalate, polyphenylene sulfide, polymethylpentene (registered trademark), polyacetal cyclic polyolefin, polyethylene, polypropylene and the like. Polyethylene terephthalate is particularly preferable because it is inexpensive and has high strength.

The adhesive film preferably has adhesion. When the second sealed portion 80 described later is formed with the adhesive film disposed between the exterior film 50 and the lid 60, the adhesive film is hardly displaced with respect to the lid 60 and the exterior film 50. By incorporating an adhesion-imparting resin into the heat-sealable resin layer of the adhesive film, adhesion can be imparted to the adhesive film. Examples of the adhesion-imparting resin include amorphous polyolefins. Examples of the amorphous polyolefin include amorphous polypropylene, and copolymers of amorphous propylene and another α-olefin. The content of the adhesion-imparting resin with respect to the parent material forming the heat-sealable resin is preferably 10 to 20 wt% or less.

The lid 60 includes a lid main body 60A. The lid main body 60A includes a first surface 61, a second surface 62, and a lid seal portion 63. The first surface 61 faces the electrode assembly 20. The second surface 62 is a surface on a side opposite to the first surface 61. The lid seal portion 63 is connected to the first surface 61 and the second surface 62, and heat-sealed to the heat-sealable resin layer 53 of the exterior film 50. The lid seal portion 63 includes a first seal surface 63A, a second seal surface 63B, a third seal surface 63C, and a fourth seal surface 63D. The first seal surface 63A forms the upper surface of the lid 60. The first seal surface 63A extends in a first direction (LR direction in the present embodiment) in front view of the lid 60. The second seal surface 63B and the third seal surface 63C are connected to the first seal surface 63A and form a lateral surface of the lid 60. The second seal surface 63B and the third seal surface 63C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth seal surface 63D forms the lower surface of the lid 60. The fourth seal surface 63D extends in a first direction (LR direction in the present embodiment) in front view of the lid 60.

The lid seal portion 63 further includes corners 64, 65, 66 and 67. The corner 64 is formed to include a boundary between the first seal surface 63A and the second seal surface 63B. The corner 65 is formed to include a boundary between the first seal surface 63A and the third seal surface 63C. The corner 66 is formed to include a boundary between the fourth seal surface 63D and the second seal surface 63B. The corner 67 is formed to include a boundary between the fourth seal surface 63D and the third seal surface 63C. In the corners 65 to 67, an R surface is formed. Therefore, in the manufacturing process of the electrical storage device 10 or in the case of vacuuming the electrical storage device 10 as a finished product, it is possible to suppress deformation of the outer packaging 40 due to, for example, formation of wrinkles in the exterior film 50. As compared with a case where the corners 65 to 67 are at a right angle, an impact from the outside is less likely to act on the corners 65 to 67. Therefore, damage of the outer packaging 40 is suppressed. In Fig. 1, the shapes of the R surfaces of the corners 65 to 67 are omitted for simplification of the drawing.

The corner 64 faces the corner 20A of the electrode assembly 20. The corner 65 faces the corner 20B of the electrode assembly 20. The corner 66 faces the corner 20C of the electrode assembly 20. The corner 67 faces the corner 20D of the electrode assembly 20.

When the lid 60 has a plate shape, the lid 60 is preferably thick enough to suppress deformation of the outer packaging 40 even if electrical storage devices 10 are stacked. From another point of view, when the lid 60 has a plate shape, the seal surfaces 63A, 63B, 63C, and 63D of the lid 60 are preferably thick enough to ensure that the seal surface 63A, 63B, 63C, and 63D of the lid 60 and the exterior film 50 can be suitably heat-sealed in formation of the second sealed portion 80 described later. The minimum value of the thickness of the lid 60 is, for example, 1.0 mm, more preferably 3.0 mm, still more preferably 4.0 mm. The maximum value of the thickness of the lid 60 is, for example, 20 mm, more preferably 15 mm, still more preferably 10 mm. The maximum value of the thickness of the lid 60 may be 20 mm or more. The thickness of the material for forming the lid 60 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. In the present embodiment, when the lid 60 is described as having a plate shape, the lid 60 does not include an aspect formed of only a film defined by Japanese Industrial Standard (JIS), Packaging Terminology Standard. The thickness of the lid 60 may vary depending on a portion of the lid 60. When the thickness of the lid 60 varies depending on a portion, the thickness of the thickest portion of the lid 60 is defined as a thickness of the lid 60.

From the viewpoint of suitably heat-sealing the lid 60 and the exterior film 50, the main components of materials for forming the lid 60 and materials for forming the heat-sealable resin layer 53 of the exterior film 50 are preferably the same. In the present embodiment, examples of the material for forming the lid 60 include polyester-based resins such as polyethylene terephthalate-based resins and polybutylene terephthalate-based resins, polyolefin-based resins such as polyethylene-based resins, fluorine-based resins and polypropylene-based resins, cyclic polyolefin-based resins, or acid-modified polyolefin-based resins obtained by graft-modifying the polyolefin-based resin with an acid such as maleic anhydride. From the viewpoint of suitably heat-sealing the lid 60 and the exterior film 50, the main components of materials for forming the lid 60 and materials for forming the heat-sealable resin layer 53 of the exterior film 50 are preferably the same. In the present embodiment, examples of the main component of the material for forming the lid 60 and the material for forming the heat-sealable resin layer 53 include polyolefin-based resins such as polyethylene-based resins and polypropylene-based resins, and acid-modified polyolefin-based resins obtained by graft-modifying the polyolefin-based resin with an acid such as maleic anhydride. Note that the main component refers to, for example, a material that accounts for 50% or more of the materials contained in a constituent element.

In the present embodiment, a through-hole 60X into which the electrode terminal 30 is inserted is formed in the lid 60. The through-hole 60X extends through the first surface 61 and the second surface 62. In a state where the electrode assembly 20 is wrapped in the exterior film 50, the electrode terminal 30 protrudes to the outside of the outer packaging 40 by passing through the through-hole 60X formed in the lid 60. A small gap between the through-hole 60X of the lid 60 and the electrode terminal 30 is filled with, for example, resin. In the electrical storage device 10, the location at which the electrode terminal 30 protrudes to the outside can be arbitrarily selected. For example, the electrode terminal 30 may protrude to the outside from a hole formed in one of the six surfaces of the outer packaging 40. In this case, a small gap between the outer packaging 40 and the electrode terminal 30 is filled with, for example, a resin. In another example, the electrode terminal 30 may protrude from a region between the seal surface 63A, 63B, 63C, or 63D of the lid 60 and the exterior film 50 to the outside of the outer packaging 40. In this case, the through-hole 60X may not be formed in the lid 60. In the electrical storage device 10, the lid 60 and the electrode terminal 30 are provided separately, but the lid 60 and the electrode terminal 30 may be integrally formed. Also when the electrode terminal 30 does not protrude from the end edge of the outer packaging 40, the through-hole 60X is not required to be formed in the lid 60.

In the present embodiment, with the exterior film 50 wound around the electrode assembly 20 so as to have the opening 40A, surfaces of the exterior film 50 which face each other (heat-sealable resin layer 53) are heat-sealed to form a first sealed portion 70.

The first sealed portion 70 is formed by heat-sealing a portion including a first edge 50A and a portion including a second edge 50B in the exterior film 50 shown in Fig. 5. The first sealed portion 70 extends in a longitudinal direction (FB direction) of the outer packaging 40. In the outer packaging 40, a location at which the first sealed portion 70 is formed can be arbitrarily selected. In the present embodiment, a root 70X of the first sealed portion 70 is preferably located on a side 43 of a boundary between a first surface 41 and a second surface 42 of the outer packaging 40. The first surface 41 has a larger area than the second surface 42. The root 70X of the first sealed portion 70 may be located on an arbitrary surface of the outer packaging 40. In the present embodiment, the first sealed portion 70 protrudes outward with respect to the electrode assembly 20 in plan view. For example, the first sealed portion 70 may be folded toward the second surface 42 or toward the first surface 41 of the outer packaging 40.

In the present embodiment, a second sealed portion 80 is formed by heat-sealing the heat-sealable resin layer 53 of the exterior film 50 and the lid seal portion 63 of the lid 60. Hereinafter, the sealing strength between the heat-sealable resin layer 53 of the exterior film 50 and the lid seal portion 63 of the lid 60 may be referred to as sealing strength of the second sealed portion 80. The sealing strength of the second sealed portion 80 is the sealing strength between the heat-sealable resin layer 53 and the lid 60 in the long-side portion of the lid seal portion 63, that is, the lid seal portion 63 extending in the LR (width) direction in Fig. 1A.

The sealing strength of the second sealed portion 80 is measured as follows. First, a notch is formed in a portion of the exterior film 50 constituting the first surface 41 of the outer packaging 40, and three belt-shaped members 41X, 41Y, and 41Z (see a two-dot chain line in Fig. 1B) arranged in the LR direction are formed. The widths of the three belt-shaped members 41X, 41Y, and 41Z in the LR direction are 15 mm. End parts of the belt-shaped members 41X, 41Y, and 41Z are joined to the lid 60 at the second sealed portion 80. The length of the lid 60 in the LR direction is 45 mm or more. Next, the sealing strength of each of the belt-shaped members 41X, 41Y, and 41Z is measured by pulling the end part opposite to the end parts of the belt-shaped members 41X, 41Y, and 41Z joined to the lid 60 upward in the UD direction (direction opposite to the first surface 41B). In the present embodiment, the sealing strength of the second sealed portion 80 is an average value of the sealing strengths of the belt-shaped members 41X, 41Y, and 41Z. When the length of the lid 60 in the LR direction is less than 45 mm, three belt-shaped members having an arbitrary width of X mm less than 15 mm are formed, and the sealing strengths of the three belt-shaped members are measured by the same method as when the length of the lid 60 in the LR direction is 45 mm or more. Each of the obtained sealing strengths is divided by an arbitrary width X mm and multiplied by 15 to be converted into the sealing strengths of the three belt-shaped members at a width of 15 mm. The sealing strength of the second sealed portion 80 is an average value of the sealing strengths of the three belt-shaped members converted into a width of 15 mm. The sealing strength of the second sealed portion 80 of the lid 60 divided into a plurality of parts including long sides and short sides is the sealing strength at the long-side portion of the lid seal portion 63 of the plurality of parts.

From the viewpoint of suitably maintaining the state in which the electrode assembly 20 is sealed with the outer packaging 40, the sealing strength of the second sealed portion 80 is preferably 40 N/15 mm or more, still more preferably 50 N/15 mm or more, still more preferably 60 N/15 mm or more, still more preferably 70 N/15 mm or more, still more preferably 85 N/15 mm or more. When the sealing strength of the second sealed portion 80 is 40 N/15 mm or more, a state in which the electrode assembly 20 is sealed with the outer packaging 40 is suitably maintained even if the electrical storage device 10 is used for, for example, several years (less than 10 years). When the sealing strength of the second sealed portion 80 is 85 N/15 mm or more, a state in which the electrode assembly 20 is sealed with the outer packaging 40 is suitably maintained even if the electrical storage device 10 is used for, for example, 10 years or more. The sealing strength of the second sealed portion 80 is preferably 300 N/15 mm or less. The sealing strength of the second sealed portion 80 is preferably in the range of 40 N/15 mm to 300 N/15 mm, 50 N/15 mm to 300 N/15 mm, 60 N/15 mm to 300 N/15 mm, 70 N/15 mm to 300 N/15 mm, or 85 N/15 mm to 300 N/15 mm.

In the present embodiment, the lid 60 has a protrusion portion 68 protruding from the lid seal portion 63 so that a gap is hardly formed between the exterior film 50 and the lid 60. The protrusion portion 68 may be formed integrally with the lid main body 60A, or may be formed separately from the lid main body 60A and joined to the lid main body 60A. In the present embodiment, the protrusion portion 68 is formed integrally with the lid main body 60A. In the lid seal portion 63, a location at which the protrusion portion 68 is formed can be arbitrarily selected. A gap between the exterior film 50 and the lid 60 is likely to be formed, for example, between the root 70X of the first sealed portion 70 and the lid 60. In particular, if the root 70X of the first sealed portion 70 is located at the corners 64 to 67 of the lid 60, ease of filling resin between the root 70X of the first sealed portion 70 and the lid 60 is likely to deteriorate. Therefore, it is preferable that the protrusion portion 68 is formed at a location where the root 70X of the first sealed portion 70 is located in the lid seal portion 63. In the present embodiment, the root 70X of the first sealed portion 70 is located at the corner 64 of the lid 60. Therefore, it is preferable that the protrusion portion 68 is formed at the corner 64 in the lid seal portion 63. In the present embodiment, the first sealed portion 70 is sealed with the protrusion portion 68 sandwiched therein. The protrusion portion 68 may be formed on at least one of the first seal surface 63A, the second seal surface 63B, the third seal surface 63C, the fourth seal surface 63D, the corner 65, the corner 66 and the corner 67.

The shape of the protrusion portion 68 can be arbitrarily selected. In the present embodiment, the protrusion portion 68 has a plate shape. The thickness of the protrusion portion 68 can be arbitrarily selected. In the present embodiment, the thickness of the protrusion portion 68 decreases with increasing distance from the corner 64. In other words, the protrusion portion 68 is tapered with increasing distance from the corner 64. The thickness of the protrusion portion 68 may be constant, or may increase with increasing distance from the corner 64.

A direction in which the protrusion portion 68 extends can be arbitrarily selected. In the present embodiment, the protrusion portion 68 extends along the first direction (LR direction in the present embodiment). The protrusion portion 68 may extend along the second direction (UD direction in the present embodiment).

The length of the protrusion portion 68 can be arbitrarily selected as long as it is equal to or smaller than the length of the first sealed portion 70. For example, the length of the protrusion portion 68 may be substantially equal to the length of the first sealed portion 70, or may be 30% to 50% of the length of the first sealed portion 70.

When the shapes of the corners 20A to 20D of the electrode assembly 20 and the corners 65 to 67 of the lid 60, more specifically, the radius of curvature of the corners 20A to 20D and the radius of curvature of the corners 65 to 67 are greatly different from each other, the exterior film 50 does not follow the electrode assembly 20, and the adhesion between the exterior film 50 and the electrode assembly 20 may deteriorate. Therefore, the electrode assembly 20 cannot be suitably held by the exterior film 50.

In the present embodiment, from the viewpoint of suitably holding the electrode assembly 20 by the exterior film 50, the absolute value of the difference between the radius of curvature of any of the corners 20A to 20D of the electrode assembly 20 and the radius of curvature of any of corners 65 to 67 of the lid 60 is 10 mm or less. The absolute value of the difference between the radius of curvature of any of the corners 20A to 20D of the electrode assembly 20 and the radius of curvature of any of corners 65 to 67 of the lid 60 is more preferably 5 mm or less, and still more preferably 3 mm or less. In the present embodiment, the radius of curvature of the corners 20A to 20D of the electrode assembly 20 includes the radius of curvature of the corner corresponding to the corners 20A to 20D appearing in the external appearance of the outer packaging 40 in a state where the electrode assembly 20 is wrapped by the exterior film 50.

In the present embodiment, the radius of curvature of each of the corners 20A to 20D is measured at a position close to the lid 60 in the electrode assembly 20. The radius of curvature of the corners 20A to 20D is a measurement value obtained by winding the exterior film 50 so as to be in contact with the outer surface of the electrode assembly 20 in a state where tension acts on the exterior film 50, and measuring the radius of curvature with an R gauge.

From the viewpoint of more suitably holding the electrode assembly 20 by the exterior film 50, the absolute value of the difference in the radius of curvature between the corners 20A to 20D of the electrode assembly 20 and opposing corners of the corners 65 to 67 of the lid 60 is preferably 10 mm or less, more preferably 5 mm or less, and still more preferably 3 mm or less. That is, the absolute value of the difference between the radius of curvature of the corner 20B of the electrode assembly 20 and the radius of curvature of the corner 65 of the lid 60 is preferably 10 mm or less, more preferably 5 mm or less, and still more preferably 3 mm or less. The absolute value of the difference between the radius of curvature of the corner 20C of the electrode assembly 20 and the radius of curvature of the corner 66 of the lid 60 is preferably 10 mm or less, more preferably 5 mm or less, and still more preferably 3 mm or less. The absolute value of the difference between the radius of curvature of the corner 20D of the electrode assembly 20 and the radius of curvature of the corner 67 of the lid 60 is preferably 10 mm or less, more preferably 5 mm or less, and still more preferably 3 mm or less.

When the radius of curvature of any of the corners 65 to 67 of the lid 60 is larger than the radius of curvature of any of the corners 20A to 20D of the electrode assembly 20, the circumferential length of the exterior film 50 joined to the lid 60 is longer than the circumferential length of the electrode assembly 20, so that there is a possibility that adhesion between the exterior film 50 and the electrode assembly 20 deteriorates. Therefore, the electrode assembly 20 may not be suitably held by the exterior film 50.

For this reason, the radius of curvature of any of the corners 65 to 67 of the lid 60 is preferably smaller than the radius of curvature of any of the corners 20A to 20D of the electrode assembly 20. From the viewpoint of more suitably holding the electrode assembly 20 by the exterior film 50, the radius of curvature of the corners 65 to 67 of the lid 60 is preferably smaller than the radius of curvature of the corners 20A to 20D of the opposing electrode assembly 20. That is, the radius of curvature of the corner 65 of the lid 60 is preferably smaller than the radius of curvature of the corner 20B of the electrode assembly 20. The radius of curvature of the corner 66 of the lid 60 is preferably smaller than the radius of curvature of the corner 20C of the electrode assembly 20. The radius of curvature of the corner 67 of the lid 60 is preferably smaller than the radius of curvature of the corner 20D of the electrode assembly 20.

The radius of curvature of at least one of the corners 65 to 67 of the lid 60 can be arbitrarily selected as long as the absolute value of the difference from the radius of curvature of any of the corners 20A to 20D of the electrode assembly 20 is 10 mm or less. From the viewpoint of suppressing an increase in the circumferential length of exterior film 50, the radius of curvature of at least one of the corners 65 to 67 of the lid 60 is preferably 10 mm or less. From the viewpoint of suitably forming the corners 65 to 67 having an R surface in the lid 60 and the viewpoint of enhancing the adhesion between the exterior film 50 and the lid 60, the radius of curvature of at least one of the corners 65 to 67 of the lid 60 is preferably 0.05 mm or more. From the viewpoint of suppressing a large difference in shape from the corners 20A to 20D of the electrode assembly 20, the radius of curvature of at least one of the corners 65 to 67 is preferably 20 mm or less. The radius of curvature of at least one of the corners 65 to 67 of the lid 60 is preferably in the range of 0.05 mm or more and 20 mm or less.

In the LR direction, the ratio of a portion having the largest outer diameter of the lid 60 to a portion having the largest outer diameter of the electrode assembly 20 is preferably ±10% or less. In the UD direction, the ratio of a portion having the largest outer diameter of the lid 60 to a portion having the largest outer diameter of the electrode assembly 20 is preferably ±10% or less.

### <1-2. Method for Manufacturing Electrical Storage Device>

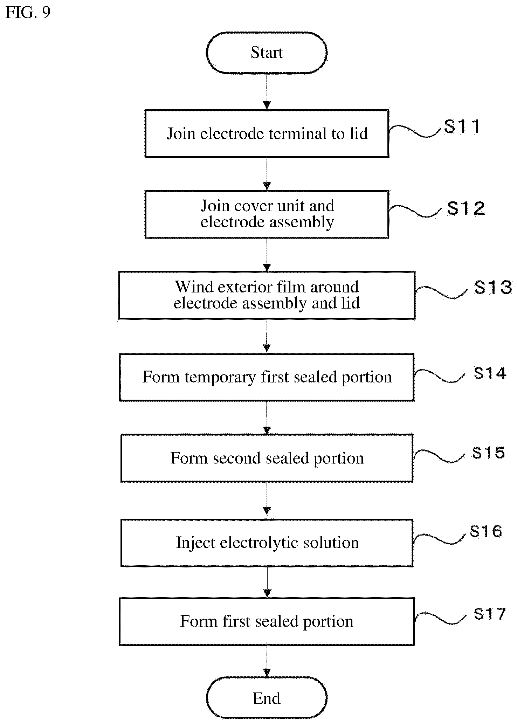

Fig. 9 is a flowchart showing an example of a method for manufacturing the electrical storage device 10. The method for manufacturing the electrical storage device 10 includes, for example, a first step, a second step, a third step, a fourth step, a fifth step, a sixth step and a seventh step. The first to seventh steps are carried out by, for example, a manufacturing apparatus for the electrical storage device 10. The term "first to seventh steps" refers to conveniently assigned names of the steps of the method for manufacturing the electrical storage device 10, and does not necessarily mean the order of the steps.

In the first step in step S11, the manufacturing apparatus joins the lid 60 and the electrode terminal 30. When the second step is completed, a pair of cover units 60Z in which the electrode terminal 30 is joined to the lid 60 is completed.

The second step in step S12 is carried out after the first step. In the second step, the manufacturing apparatus disposes the pair of cover units 60Z on the side of the electrode assembly 20, and joins the electrode terminal 30 and the electrode assembly 20. The method for manufacturing the electrical storage device 10 may include a step of first joining the electrode assembly 20 and the electrode terminal 30, and joining the lid 60 to the electrode terminal 30 joined to the electrode assembly 20, instead of the first step and the second step.

The third step in step S13 is carried out after the second step. In the third step, the manufacturing apparatus winds the exterior film 50 around the electrode assembly 20 and the lid 60. In the third step, the manufacturing apparatus winds the exterior film 50 around the electrode assembly 20 and the lid 60 with tension applied to the exterior film 50 while controlling the movement of the electrode assembly 20 and the lid 60 by a regulating means. The regulating means is, for example, a groove into which the electrode assembly 20 and the lid 60 are fitted. The regulating means may be an apparatus that applies an external force to the electrode assembly 20 and the lid 60 so that the electrode assembly 20 and the lid 60 do not move. The regulating means may be an apparatus that applies a force to the electrode assembly 20 and the lid 60 in a direction opposite to a direction in which the exterior film 50 is pulled. Note that the regulating means may include a roller for removing wrinkles of the exterior film 50 by running on the exterior film 50 with the exterior film 50 being pulled.

The fourth step in step S14 is carried out after the third step. In the fourth step, the manufacturing apparatus forms a first sealed portion in which an unsealed portion for injecting an electrolytic solution is partially formed (hereinafter, referred to as "temporary first sealed portion"). In the temporary first sealed portion, the heat-sealable resin layers 53 facing each other of the exterior film 50 are joined to each other in a state where the protrusion portion 68 of the lid 60 is sandwiched by the exterior film 50. When the electrical storage device 10 is, for example, an all-solid-state battery, a step of injecting an electrolytic solution is not necessary, and thus, in the fourth step, the manufacturing apparatus forms the first sealed portion 70.

The fifth step in step S15 is carried out after the fourth step. In the fifth step, the manufacturing apparatus forms the second sealed portion 80 by, for example, heat-sealing the heat-sealable resin layer 53 of the exterior film 50 and the lid seal portion 63 of the lid 60. The fifth step preferably includes a first sealing step and a second sealing step. In the first sealing step, the manufacturing apparatus heat-seals the first seal surface 63A, the second seal surface 63B, the third seal surface 63C, and the fourth seal surface 63D of the lid seal portion 63, the protrusion portion 68 including the corner 64, and the exterior film 50. The second sealing step is carried out after the first sealing step. In the second sealing step, the manufacturing apparatus heat-seals the corners 65 to 67 and the exterior film 50. In the second sealing step, a heat seal bar having the same radius of curvature as that of the R surface of the corners 65 to 67 is preferably used.

The sixth step in step S16 is carried out after the fifth step. In the sixth step, the manufacturing apparatus injects the electrolytic solution from the unsealed portion formed in the temporary first sealed portion.

The seventh step in step S17 is carried out after the sixth step. In the seventh step, the manufacturing apparatus forms the first sealed portion 70 by heat-sealing a portion including the unsealed portion of the temporary first sealed portion. When the electrical storage device 10 is, for example, an all-solid-state battery, the sixth step and the seventh step are omitted.

### <1-3. Effects of Electrical Storage Device>

In the electrical storage device 10, the absolute value of the difference between the radius of curvature of any of the corners 20A to 20D of the electrode assembly 20 and the radius of curvature of any of corners 65 to 67 of the lid 60 is 10 mm or less, so that the exterior film 50 easily follows the electrode assembly 20. Therefore, the electrode assembly 20 can be suitably held by the exterior film 50.

### [2. Modifications]

The above-described embodiments are an example of possible forms of the electrical storage device and the lid according to the present invention, and are not intended to limit the form thereof. The electrical storage device and the lid according to the present invention may have a form different from that exemplified in each of the embodiments. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

<2-1>
In the above embodiment, the protrusion portion 68 may be omitted from the lid 60. In the modification, from the viewpoint of suitably forming the first sealed portion 70, the corner 64 is preferably substantially at a right angle.

In another example, when the protrusion portion 68 is omitted from the lid 60, an R surface may be formed at the corner 64. From the viewpoint of suitably holding the electrode assembly 20 by the exterior film 50, the absolute value of the difference between the radius of curvature of any of the corners 20A to 20D of the electrode assembly 20 and the corner 64 of the lid 60 is preferably 10 mm or less, more preferably 5 mm or less, and still more preferably 3 mm or less.

From the viewpoint of more suitably holding the electrode assembly 20 by the exterior film 50, the absolute value of the difference between the radius of curvature of the corner 20A of the electrode assembly 20 and the corner 64 of the lid 60 is preferably 10 mm or less, more preferably 5 mm or less, and still more preferably 3 mm or less.

When the radius of curvature of the corner 64 of the lid 60 is larger than the radius of curvature of any of the corners 20A to 20D of the electrode assembly 20, the peripheral length of the exterior film 50 joined to the lid 60 is longer than the peripheral length of the electrode assembly 20, so that there is a possibility that adhesion between the exterior film 50 and the electrode assembly 20 deteriorates. Therefore, the electrode assembly 20 cannot be suitably held on the exterior film 50.

For this reason, the radius of curvature of the corner 64 of the lid 60 is preferably smaller than the radius of curvature of any of the corners 20A to 20D of the electrode assembly 20. From the viewpoint of more suitably holding the electrode assembly 20 by the exterior film 50, the radius of curvature of the corner 64 of the lid 60 is preferably smaller than the radius of curvature of the corner 20A of the electrode assembly 20. The radius of curvature of the corner 64 of the lid 60 may be equal to or larger than the radius of curvature of any of the corners 20A to 20D of the electrode assembly 20.

The radius of curvature of the corner 64 of the lid 60 can be arbitrarily selected. From the viewpoint of suppressing an increase in the circumferential length of exterior film 50, the radius of curvature of the corner 64 of the lid 60 is preferably 20 mm or less. From the viewpoint of suitably forming the corner 64 having an R surface in the lid 60, the radius of curvature of the corner 64 of the lid 60 is preferably 0.05 mm or more. From the viewpoint of suppressing a large difference in shape from the corners 20A to 20D of the electrode assembly 20, the radius of curvature of the corner 64 is preferably 20 mm or less. The radius of curvature of the corner 64 of the lid 60 is preferably in the range of 0.05 mm or more and 20 mm or less.

<2-2>
In the above embodiment, the magnitude relationship between the radius of curvature of any of the corners 65 to 67 of the lid 60 and the radius of curvature of any of the corners 20A to 20D of the electrode assembly 20 can be arbitrarily changed. The radius of curvature of any of the corners 65 to 67 of the lid 60 may be equal to or larger than the radius of curvature of any of the corners 20A to 20D of the electrode assembly 20.

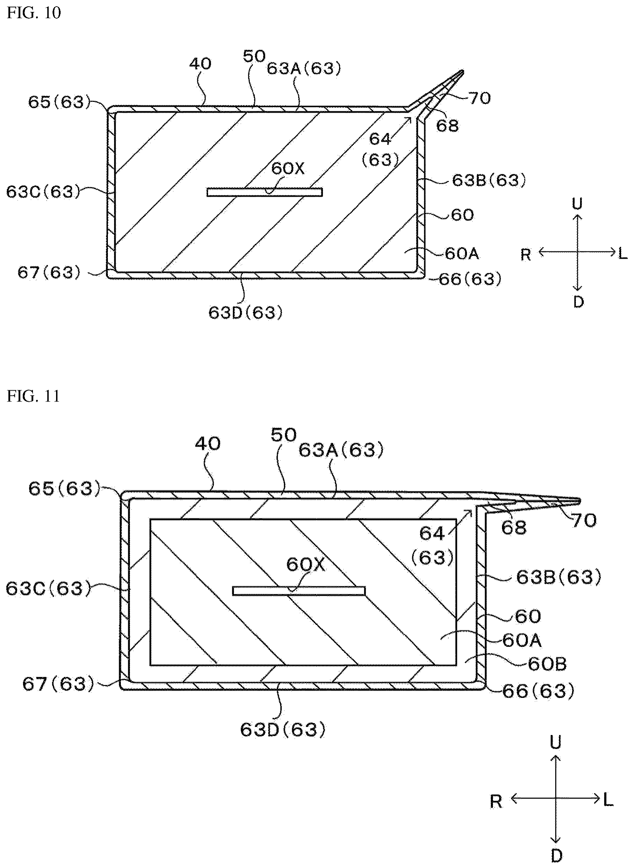

<2-3>
In the electrical storage device 10 of the above-described embodiment, the direction in which the protrusion portion 68 extends can be arbitrarily changed. For example, as shown in Fig. 10, the protrusion portion 68 may extend in a first direction (LR direction in the embodiment) and a third direction crossing a second direction (UD direction in the embodiment) in front view of the lid 60.

<2-4>
In the electrical storage device 10 of the above-described embodiment, the configuration of the lid 60 can be arbitrarily changed. As shown in Fig. 11, the lid 60 may include a frame 60B that covers the lid main body 60A. In this modification, for example, an arbitrary material such as metal, resin, or a composite material of metal and resin can be used as a material for forming the lid main body 60A. The material for forming the frame 60B is, for example, a resin that can be suitably sealed to the heat-sealable resin layer 53 of exterior film 50. In this modification, the lid seal portion 63 and the protrusion portion 68 of the lid 60 are formed on the frame 60B.

<2-5>
In the electrical storage device 10 of the above-described embodiment, the specific method for forming the protrusion portion 68 of the lid 60 can be arbitrarily changed. For example, the protrusion portion 68 may be formed by an adhesive film or the like which is joined to the lid seal portion 63 of the lid main body 60A. In this modification, for example, a plurality of adhesive films may be joined in a stacked state to the lid seal portion 63 to form the protrusion portion 68, or the adhesive film may be joined to the lid seal portion 63 in a flap shape to form the protrusion portion 68.

<2-6>
For suitably bonding the exterior film 50 and the lid 60, the electrical storage device 10 of the above-described embodiment may include an adhesive film disposed between the exterior film 50 and the lid 60. In this modification, for example, the second sealed portion 80 is formed after the lid 60 to which the adhesive film is bonded is attached to the opening 40A at both ends of the outer packaging 40. For example, the adhesive film is wound around the lid 60 so as to cover the entire surface of the lid seal portion 63 of the lid 60. The adhesive film is preferably configured to be wider than the lid seal portion 63 of the lid 60 as a whole. In this case, the adhesive film can be easily adhered to the lid 60. Further, since corners 64 to 67 of the lid seal portion 63 are covered with the adhesive film, bondability between the lid 60 and the adhesive film is enhanced.

The adhesive film can be arbitrarily selected as long as it is a film capable of bonding the exterior film 50 and the lid 60. The adhesive film is preferably a multilayer film including at least a heat-sealable resin layer, a heat-resistant base material layer and a heat-sealable resin layer in the stated order. As specifications about the heat-sealable resin layer of the adhesive film, specifications about the heat-sealable resin layer 53 can be applied. As materials for forming the heat-sealable resin layers on both sides of the adhesive film, the same material or different materials may be used, and materials that match the material for forming the heat-sealable resin layer 53 of the exterior film 50 and the material for forming the lid 60 are appropriately selected. The material for forming the heat-sealable resin layer of the adhesive film, which is bonded to the lid 60, is preferably an acid-modified polyolefin-based resin obtained by graft modification with an acid such as maleic anhydride. For the heat-sealable resin layer of the adhesive film, which is bonded to the exterior film 50, the same material as that for forming the heat-sealable resin layer 53 of the exterior film 50 is preferably used.

For the heat-resistant base material layer, any film may be used as long as it is made from a heat-resistant resin, and examples thereof include non-stretched or stretched films of polyethylene terephthalate, polyethylene naphthalate, polyphenylene sulfide, polymethylpentene (registered trademark), polyacetal cyclic polyolefin, polyethylene, polypropylene and the like. Polyethylene terephthalate is particularly preferable because it is inexpensive and has high strength.

The adhesive film preferably has adhesion. When the second sealed portion 80 is formed with the adhesive film disposed between the exterior film 50 and the lid 60, the adhesive film is hardly displaced with respect to the lid 60 and the exterior film 50. By incorporating an adhesion-imparting resin into the heat-sealable resin layer of the adhesive film, adhesion can be imparted to the adhesive film. Examples of the adhesion-imparting resin include amorphous polyolefins. Examples of the amorphous polyolefin include amorphous polypropylene, and copolymers of amorphous propylene and another α-olefin. The content of the adhesion-imparting resin with respect to the parent material forming the heat-sealable resin is preferably 10 to 20 wt% or less.

<2-7>
In the above-described embodiment, a location at which the electrode terminal 30 is disposed can be arbitrarily selected. For example, the electrode terminal 30 may protrude from the first sealed portion 70.

### Reference Signs List

10 Electrical storage device
20 Electrode assembly
20A, 20B, 20C, 20D Corner
40 Outer packaging
40A Opening
50 Exterior film
60 Lid
60Z Cover unit
64, 65, 66, 67 Corner

## Claims

1. An electrical storage device comprising:
an electrode assembly; and
an outer packaging sealing the electrode assembly, wherein
the outer packaging includes
an exterior film wrapping the electrode assembly so as to form an opening, and
a lid disposed at the opening,
the electrode assembly has a corner at which an R surface is formed,
the lid has a corner in which an R surface is formed, and
an absolute value of a difference between a radius of curvature of the corner of the electrode assembly and a radius of curvature of the corner of the lid is 10 mm or less.

2. The electrical storage device according to claim 1, wherein the radius of curvature of the corner of the lid is smaller than the radius of curvature of the corner of the electrode assembly.

3. The electrical storage device according to claim 1 or 2, wherein the radius of curvature of the corner of the lid is 0.05 mm or more.

4. The electrical storage device according to claim 1 or 2, wherein the corner of the lid and the corner of the electrode assembly face each other.

5. A lid used as an outer packaging of an electrical storage device, the lid comprising
at least one corner in which an R surface is formed, wherein
a radius of curvature of the corner is 20 mm or less.

6. A cover unit comprising:
the lid according to claim 5; and
an electrode terminal joined to the lid.
